# EUROPEAN PATENT SPECIFICATION

(11) **EP 1 759 799 B1**
(45) Date of publication and mention of the grant of the patent: **19.11.2014**
(21) Application number: 06252373.3
(22) Date of filing: 04.05.2006
(51) Int. Cl.: B23K 9/04

(54) **Method for forming or remanufacturing a turbine engine component**
Verfahren zur Formgebung oder Herstellung von Turbinenmotorelementen
Procédé de façonnage ou de refabrication d'éléments de moteur à turbine

(30) Priority: 29.08.2005 US 214282
(43) Date of publication of application: 07.03.2007
(73) Proprietor: United Technologies Corporation, Hartford, CT 06101 (US)
(72) Inventor: Szela, Edward R., West Springfield, MA 01089 (US); Finn, John H., Northford, CT 06472 (US); Moor, James J., Torrington, CT 06790 (US)
(74) Representative: Leckey, David Herbert

(56) References cited:
- DE-C- 19 547 903
- GB-A- 2 267 244
- US-A- 6 103 186

## Description

### BACKGROUND OF THE INVENTION

The invention relates to the manufacture, remanufacture, and restoration of nickel- or cobalt-based superalloy parts. More particularly, the invention relates to the restoration and/or remanufacture of defective, worn, and/or damaged gas turbine engine components including turbine and compressor blades and vanes, blade outer air seals, and transition duct segments as claimed in claim 1.

DE 19547903 C1 describes a method for lengthening turbine blades.

The components of gas turbine engines are subject to wear and damage. Even moderate wear and damage of certain components may interfere with optimal operation of the engine. Particular areas of concern involve parts which interact with the gas path such as seals and the airfoils of various blades and vanes. Wear and damage may interfere with their aerodynamic efficiency, produce dynamic force imbalances, and even structurally compromise the worn/damaged parts in more extreme cases.

Various techniques have been proposed for more extensive restoration of worn or damaged parts of gas turbine engines. U.S. Patent No. 4,822,248 discloses use of a plasma torch to deposit nickel- or cobalt-based superalloy material. U.S. Patent No. 5,732,467 identifies the use of high velocity oxy-fuel (HVOF) and low pressure plasma spray (LPPS) techniques for repairing cracks in such turbine elements. U.S. Patent No. 5,783,318 also identifies LPPS techniques in addition to laser welding and plasma transferred arc welding. U.S. Patent No. 6,049,978 identifies further use of HVOF techniques. Such techniques have offered a limited ability to build up replacement material to restore an original or near original cross-section. However, the structural properties of the replacement material may be substantially limited relative to those of the base material. U.S. Patent Nos. 4, 008,844 and 6,503,349 disclose methods and repair materials for transient liquid phase diffusion brazing repairs. Such a repair material is available under the trademark TURBOFIX.

Cracks tend to be rather narrow (e.g., 0. 25mm or less), but can be much wider depending upon engine exposure and oxidation. For thin cracks, it may be advantageous to form a diffusion bond crack repair (i.e., without machining out the crack to broaden the crack). This is also identified as "healing" the crack in a metallic substrate. An advantage of a healing is that the small transverse distances across the crack permit substantial diffusion, allowing the melting point depressants to diffuse out from the material within the crack and leaving highly near base metal composition. For typical nickel-base superalloys this results in an isothermally solidified structure of the repaired area whose mechanical properties are near that of the base metal.

For larger defects (e.g. large chips, wear areas, or contaminated cracks requiring routing out to provide a clean base metal surface) a "build-up" repair is required (e.g., wherein portions of the repair material are built-up more than about 1mm from the nearest base metal of the substrate). In many cases, a common alloy mixture may be used for both crack and build-up repairs although specifically designed "preforms" (i.e., prostheses or biscuits) may be developed for a recurrent build-up repair. For build-up repairs, usually only a partial isothermal structure is achieved due to limitations in diffusion time relative to the required diffusion distances. As such, the build-up repair will have a coarse, more globular, type of microstructure while the crack repair will tend to look much like the base alloy with a similarly-defined grain structure.

For parts having cooling passageways, various techniques have been proposed for preserving those passageways when the passageways intersect the damage or wear site. U.S. Patent No. 6,742,698 discloses a refractory metal insert used with welding repairs along a trailing edge region of an airfoil. U.S. Patent No. 5,935,718 discloses inserts used in brazing and solder repairs. Copending U.S. Patent Application No. 11/123,769 discloses in situ formation of a refractory metal insert.

### SUMMARY OF THE INVENTION

Accordingly, the invention involves a method for forming or remanufacturing a turbine engine component to have an internal space or cavity. A refractory metal blocking element is formed, in situ, with at least a portion to be within the internal space. The formation includes an at least partial melting. A material is added, the blocking element at least partially blocking entry of the material to the internal space. The blocking element is removed.

In various implementations, the forming may include inserting a pre-formed first part of the blocking element and forming, in situ, a second part of the blocking element. The material may be added by a progressive build-up. The forming of the first part may include one or more of cutting from sheet stock, stamping, and casting. The second part may be formed from a refractory metal powder and binder combination. The second part may consist essentially of said refractory metal powder and said binder. The refractory metal powder may comprise a mixture of refractory metals.

The forming may comprise mixing a refractory metal powder and a binder. The mixed refractory metal powder and binder may be applied to the component. The applied refractory metal powder and binder may be shaped. The adding may comprise at least one of welding (e.g., gas tungsten arc welding), laser cladding, and diffusion brazing.

The portion may comprise a first portion inserted within a pre existing portion of the internal space and a second portion. The component may have previously lacked said internal space. The adding may comprise diffusion brazing using a powdered material comprising a mixture of first and second component powders, the second powder being a majority, by weight, of the powdered material and the first powder acting to infiltrate the second powder upon melting of the first powder. The first powder component may include in its composition a quantity of a melting point depressant substantially in excess of that in the second powder. The first and second component powders may be present in a mass ratio of between 1:10 and 1:2. The first component powder may have at least 2.5% boron and the second component powder may have less than 0.5% boron. The first component powder may have at least 2% boron and the second component powder may have less than 1% boron. The first and second component powders may be nickel based. The internal space may extend to a damage site from which the component has lost first material. The method may further comprise removing additional material at least partially from the damage site to create a base surface. The adding of the material may add the material atop the base surface at least partially in place of the first material and the additional material. The material may in major part replace said first material. The blocking element may have a first surface portion having a shape effective to re-form an internal surface portion of the component bounding the internal space. The placing may cause the first surface portion to at least partially protrude from an intact portion of the component. The adding of the material may include adding the material atop the first surface portion. The component may be an internally-cooled gas turbine engine turbine section element. The material may be selected from the group consisting ofNi- or Co-based superalloys. The component may comprise a substrate material selected from the group consisting ofNi- or Co-based superalloys. The component may be a blade having an airfoil and the material may be added along a tip of the airfoil. The component may be a blade or vane having an airfoil and the material may be added along a trailing edge of the airfoil. The material may be added to a depth of at least 2.0 mm. The method may further comprise machining the material to restore an external contour of the airfoil. The positioning of the blocking element may comprise trimming a pre formed insert. The removing may comprise at least one of chemically removing and mechanically removing. The removing may comprise pulling. The method may be a portion of a reengineering and remanufacturing process wherein the component has been in service without said internal space and said internal space functions to increase resistance to thermal-mechanical fatigue.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 is a view of a turbine blade of a gas turbine engine.
FIG. 2 is an enlarged view of a portion of the airfoil of the blade of FIG. 1 during repair.
FIG. 3 is a sectional view of the airfoil of FIG. 2 taken along line 3-3 during a first stage of repair.
FIG. 4 is a view of the airfoil of FIG. 3 in a second stage of repair.
FIG. 5 is a view of the airfoil of FIG. 3 in a third stage of repair.
FIG. 6 is a view of the airfoil of FIG. 3 in a fourth stage of repair.
FIG. 7 is a view of the airfoil of FIG. 3 in a fifth stage of repair.
FIG. 8 is an enlarged view of a portion of the airfoil of the blade of FIG. 1 during an intermediate stage of an alternative repair.
FIG. 9 is a sectional view of the airfoil of FIG. 8.
FIG. 10 is a view of the airfoil of FIG. 9 in a subsequent stage of the alternative repair.
FIG. 11 is a view of a turbine vane of a gas turbine engine.
FIG. 12 is a sectional view of an airfoil of the vane of FIG. 11 during an intermediate stage of repair taken along line 12-12.
FIG. 13 is a partial sectional view of an airfoil of the vane of FIG. 11 during an intermediate stage of repair taken along line 13-13.

Like reference numbers and designations in the various drawings indicate like elements.

### DETAILED DESCRIPTION

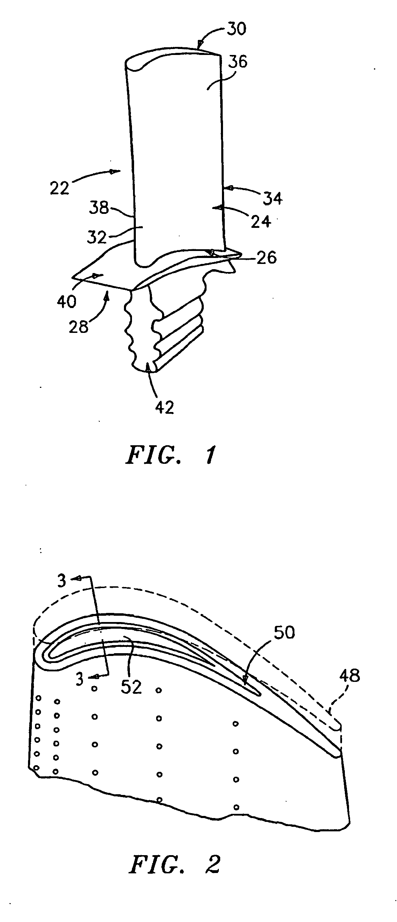

FIG. 1 shows a gas turbine element (e.g., a gas turbine engine turbine blade 22). The exemplary blade 22 includes an airfoil 24 extending from a root 26 at a platform 28 to a tip 30. The airfoil has leading and trailing edges 32 and 34 separating pressure and suction sides 36 and 38. The platform 28 has an outboard portion 40 for forming an inboard boundary/wall of a core flowpath through the turbine engine. A mounting portion or blade root 42 depends centrally from the underside of the platform 28 for fixing the blade in a disk of the turbine engine. Optionally, all or some portion (e.g., the platform 28 and airfoil 24) may be coated. A cooling passageway network (not shown in FIG. 1) may extend through the blade from one or more inlets in the root to multiple outlets along the blade sides, edges, tip, and/or root. Exemplary blades may be made from nickel- or cobalt-based superalloys.

Various portions of the blade or other component may be subject to various kinds of damage. Repairing or remanufacturing the blade may, therefore, require the addition of material to replace lost material. Also, the addition of material may be appropriate in a variety of non-damage situations including initial manufacture, augmentation, reconfiguration, and the like. In various situations, the additional material must be added adjacent an internal space such as a portion of the passageway network. It may be desirable to use a sacrificial backing/blocking element to block the internal space from entry of the additional material and serve as a backing scaffold as the additional material is built up atop the backing/blocking element. Some uses for such backing/blocking elements involve the preservation of an outlet to a surface of the component. Other situations involve deporting the additional material to close an opening. For example, the opening may be a breach to an internal cavity formed by damage or formed by machining to clean the damaged surface or further to true the damaged surface.

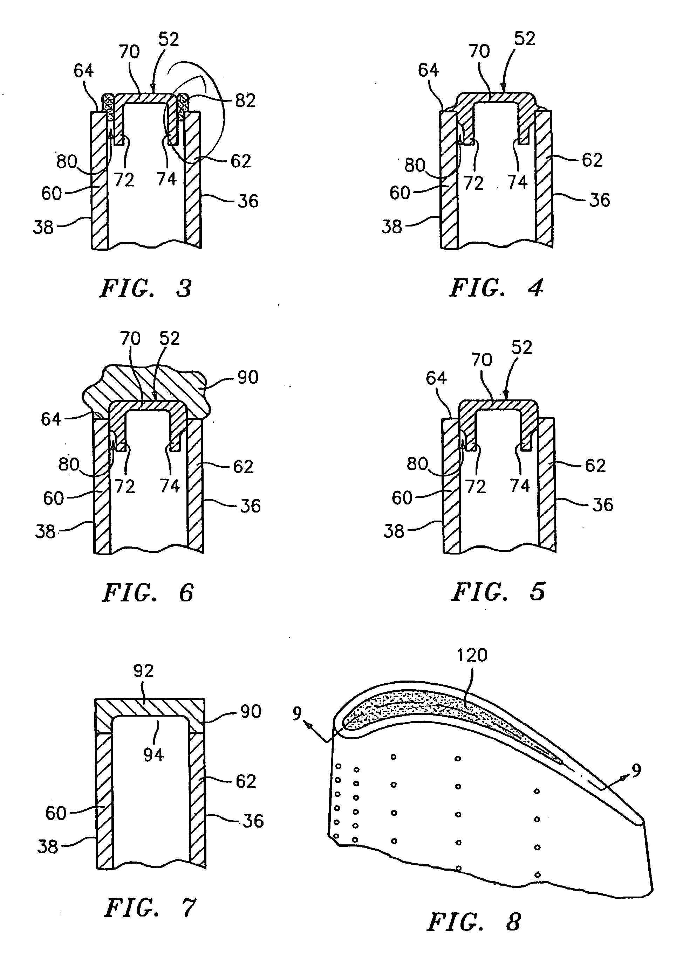

FIG. 2 shows an exemplary such situation where a tip portion 48 at the tip 30 has been removed, exposing a cooling passageway/cavity 50. To block the cavity 50 and provide a partial base for the additional material, a refractory insert may be installed as a portion of backing/blocking element in the cavity 50 and may protrude a desired distance therefrom. FIG. 3 shows the insert 52 positioned between pressure and suction sidewall portions 60 and 62 of the airfoil 24. An exemplary insert 52 may be stamped or otherwise cut and formed from sheet metal. The insert 52 may be inserted after a machining to prepare (e.g., trim/clean/true) an exposed end surface 64 of the airfoil. The exemplary insert 52 includes a central web 70 shaped generally to correspond with the cavity 50. The exemplary insert 52 includes a wall structure having pressure and suction side portions 72 and 74 (e.g., corresponding to those adjacent sides of the blade) extending into the cavity 52.

Due to manufacturing or other constraints, or as desired, there may be one or more gaps 80 between the insert 52 and the adjacent intact portions of the blade. To close these gaps 80 and optionally help secure the insert 52, a refractory metal paste bead 82 may be applied between the blade and the insert 52. An exemplary paste 82 may be formed of a refractory metal powder and a binder. Together, the insert 52 and bead 82 may form the blocking/backing element. After introduction, the bead 82 may be subject to one or more further shaping steps such as sculpting (e.g., to form a smooth continuous shape with the insert 52 to form a desired ultimate shape for the cavity along the additional material). After mechanical shaping (if any) of the bead 82, the bead may be heated to at least partially melt. Exemplary heating may be performed by a machine-held or hand-held laser apparatus. The melting may reduce local porosity of the bead, may help mechanically integrate the bead with the insert 52, and may render the bead more easily machinable.

FIG. 4 shows the bead post-melting with slight flashing onto the surface 64. After the melted bead has cooled, it may be machined. Exemplary machining may involve simultaneous machining of the insert and the surface 64 (FIG. 5). Thereafter, the additional material 90 (FIG. 6) may be applied by an appropriate progressive build-up technique (e.g., diffusion brazing, laser cladding, or gas tungsten arc welding). After the required additional material 90 has been applied, the remaining insert 52 and bead 82 may be removed (e.g., by chemical leaching). The additional material 90 may be machined to relieve an exterior surface 92 (FIG. 7) (e.g., restoring the corresponding exterior surface of the original airfoil). The melting of bead 82 and subsequent machining helps provide a smooth interior surface 94 of the additional material 90. In addition to smoothness and preciseness, there may be less chemical interaction between the additional material 90 and the bead 82 than if the bead 82 had not been melted.

FIGS. 8-10 show an alternate implementation wherein a refractory metal paste 120 is used to form a backing element in the absence of a separate pre-formed insert or other part. The paste 120 may be molded or sculpted in situ by any of a variety of techniques. The paste may be melted and machined in similar fashion to the bead 82 prior to application of the restoring material.

As an alternative to use of a refractory metal paste, other forms of refractory metals and delivery mechanisms may be used. Dry refractory metal powders, tapes, or wires may be applied and then at least partially melted. Melting means other than lasers may be utilized. Whereas the foregoing examples involve pre-placement of all the refractory metal materials prior to melting, there are other alternatives. A number of these alternatives involve build-up of at least some of the refractory metal material. Exemplary build up may be by thermal spray or sputtering. The thermal spray may be from refractory metal powder or wire feedstock. The sputtering may involve use of an electro spark discharge (ESD) apparatus. As with the paste, the build-up may be used in combination with a pre-formed insert or not. The build-up may be followed by similar machining and other processing steps to those noted for the paste.

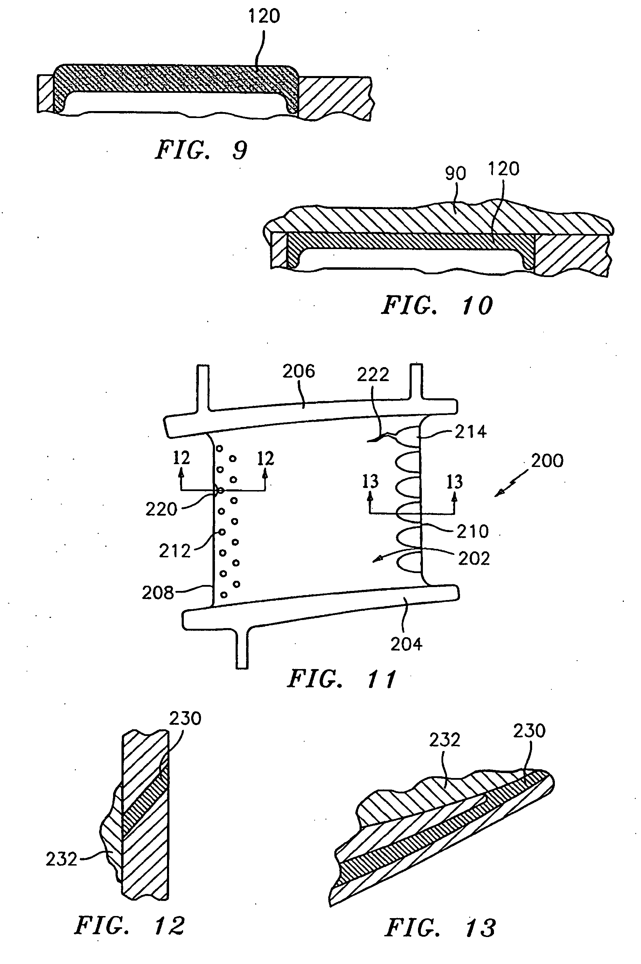

In one build-up example, FIG. 11 shows a vane 200 having an airfoil 202 extending between an inboard platform 204 and an outboard shroud 206. The airfoil has leading and trailing edges 208 and 210, respectively. A vane cooling passageway network includes outlets in the form of leading edge cooling holes 212 and trailing edge slots 214. As with blade airfoils, the airfoil's leading edge region may be particularly susceptible to foreign object damage and the trailing edge region may be particularly susceptible to thermal-mechanical fatigue. Thus, the leading edge may have chips 220 and there may be cracks 222 extending from the slots 214 (e.g., along the pressure side). FIGS. 12 and 13 show refractory metal material 230 having been sprayed into the cooling holes 212 and outlet slots 214 to in situ form blocking/backing elements. The material 230 prevents infiltration of additional material 232 built up on the vane adjacent the cooling hole 212 and slot 214.

The additional material (restoration or repair material) 90 and 232 may be applied via a number of processes. Exemplary processes are high energy processes such as laser cladding and diffusion blazing. Welding (e.g., an alternative gas tungsten arc welding) is an alternative. A preferred diffusion braze involves use of a transient liquid phase (TLP) forming process such as disclosed in US Patent 4,008,844. In this process, powders of multiple alloys are provided either pre-mixed or mixed by the application apparatus. The component powders may be selected in view of the workpiece properties. The exemplary powder material includes a TLP-forming powder and a main powder. The exemplary main powder may have a composition similar to the desired deposit (and to the substrate material). The TLP powder may have an otherwise generally similar composition but including at least one melting point depressant such as boron and/or silicon. A substantially higher concentration of such depressant in the TLP-forming powder than in the main powder permits a relatively low melting point for the TLP-forming powder and facilitates infiltration of the melted TLP-forming powder into the main powder and substrate. Such depressant in the main powder would essentially be wasted and would add to the total depressant in the repair (thereby compromising the remelt temperature).

The workpiece (e.g., the exemplary blade 22 and vane 200) may consist of or comprise a nickel- or cobalt-based superalloy substrate (e.g., such a substrate may have a protective coating). The methods may be used to form a deposit for replacing material lost from the substrate (e.g., due to damage plus cleaning and preparation) or to augment (e.g., fill a manufacturing defect, coat with a dissimilar material, or otherwise).

Prior to material application, the site may be cleaned of contamination. Protective coatings may be locally or globally removed or left in place. Coating removal may be by grit blast (e.g., for ceramic barrier coatings) or by exposure to liquid acids (e.g., a hydrochloric/nitric acid solution for removal of metallic coatings). Additional steps such as vacuum cleaning, or fluoride ion cleaning may be employed to remove tenacious oxides formed during engine operation. When oxidation products extend into deep cracks, fluoride cleaning is typically most appropriate. Corrosive products may also be removed by chemical means or by grit blast.

If used, the insert 52 may be pre-formed of a refractory metal (e.g., selected from the group consisting of niobium, tantalum, molybdenum, tungsten, and alloys/combinations thereof). Exemplary forming may be from sheet stock and include cutting and shaping (e.g., folding/bending or stamping). The paste 82, 120, and 230 may be formed by mixing one or more powders of such refractory metals with one or more binders. An exemplary binder is NICROBRAZ S binder from Wall Colmonoy Corporation, Madison Heights, Michigan. It may be particularly advantageous to use a mixture of different refractory metals to optimize diffusion properties of the paste (e.g., the degree to which the paste acts as a sink to extract melting point depressants from the applied material 90 and 232). The depressant extraction removes a portion of the depressant that would otherwise remain in the applied material and adjacent substrate material. This increases the remelt temperature of the applied material and adjacent substrate material to improve ultimate component performance. Similarly, the paste mixture may contain non-refractory components. These non-refractory components could be substituted to achieve a desired interaction with the repair material and/or substrate (e.g., providing components to diffuse into the repair material, components to act as a sink, or components for otherwise chemically reacting).

In the exemplary TLP repair, after backing/blocking element formation, paste patches of the repair material are applied at the sites on the component. An exemplary viscous repair material paste is formed by combining the alloy powders and a suitable volatile binder which is flux free to avoid contamination. The binder is capable of being burned off without leaving an undesirable residue when the paste is heated. Advantageously, the binder bums off well before melting of the TLP material begins (e.g., bums off at or below 538°C (1000°F)). An exemplary binder is NICROBRAZ S binder from Wall Colmonoy Corporation, Madison Heights, Michigan.

To initiate the bonding, the pasted airfoil is heated. In an exemplary processing cycle, the component and paste are heated in a suitable protective atmosphere (e.g., inert gas, vacuum, or other gas not adversely interacting with the process). An exemplary temperature for a nickel-based superalloy system is about 1204°C (2200°F) (e.g., 1177-1246°C (2150-2275°F)). An exemplary duration of this heating is 5-24 hours (e.g., about ten hours). The heating is advantageously sufficient to provide substantial diffusion of the depressant throughout the second powder and into adjacent substrate with a portion being taken by the backing/blocking element. Following this heating the component may be rapidly cooled. In a second exemplary processing cycle for a cobalt-based superalloy system, the component and paste are heated in a suitable protective atmosphere to a greater temperature for a much shorter duration. An exemplary temperature is about 1260°C (2300°F) (e.g., 1232-1288°C (2250-2350°F)). An exemplary duration of this heating less than about thirty minutes, preferably fifteen minutes or less and is followed by rapid cooling.

Alternative techniques for applying the repair or restoration material include various welding techniques. An exemplary gas tungsten arc welding process is disclosed in US Patent No. 6,742,698. Other alternatives involve laser cladding. In an exemplary laser cladding process, an automated vision-controlled system feeds a superalloy powder (e.g., at a constant flow rate). The powder is then fused with the substrate material below or with a prior clad layer below via laser.

After the repair or restoration material has been applied, the backing/blocking element may then be removed by leaching. The exterior contour of the component may be restored by machining the applied material. The component may then be subjected to an aging heat treatment. A coating may be applied (either overall or locally atop the machined patch areas if coating is elsewhere intact).

## Claims

1. A method for forming or remanufacturing a turbine engine component (22; 200) to have an internal space (50) comprising;
forming, in situ, a refractory metal based blocking element with at least a portion to be within the internal space (50), said forming including an at least partial melting;
adding a material (90; 232) to the component (22; 200), the blocking element at least partially blocking entry of the material (90; 232) to the internal space (50); and
removing the blocking element.

2. The method of claim 1 wherein the adding is by progressive build-up.

3. The method of claim 1 or 2 wherein the forming comprises at least one of sputtering, and thermal spray.

4. The method of claim 1, 2 or 3 wherein the forming comprises:
inserting a pre-formed first part (52) of said blocking element; and
forming, in situ, a second part (82) of said blocking element.

5. The method of claim 4 wherein the forming of the second part (82) comprises:
at least one of applying a wire, tape, powder, or paste; and
said at least partial melting of said wire, tape, powder, or paste.

6. The method of claim 5 wherein said at least partial melting is by laser heating.

7. The method of claim 4, 5 or 6 wherein the forming of the second part (82) comprises at least one of:
sputtering, and thermal spray.

8. The method of any of claims 4 to 7 wherein the forming comprises:
forming said first part (52) including one or more of:
cutting;
stamping; and
casting; and
forming said second part (82) from a binder and a powder containing one or more refractory metals.

9. The method of claim 8 wherein said second part (82) consists essentially of said refractory metal powder and said binder.

10. The method of claim 8 or 9 wherein said refractory metal powder comprises a mixture of refractory metals.

11. The method of any preceding claim wherein the adding comprises at least one of:
welding, laser cladding, and diffusion brazing.

12. The method of any preceding claim wherein the forming comprises:
mixing a refractory metal powder and a binder.

13. The method of claim 12 wherein the forming further comprises:
applying the mixed refractory metal powder and binder to the component (22; 200).

14. The method of claim 13 wherein the forming further comprises:
shaping the applied refractory metal powder and binder.

15. The method of any preceding claim wherein:
the portion comprises a first portion inserted within a pre-existing portion of the internal space (50) and a second portion.

16. The method of any preceding claim wherein:
the component (22; 200) had previously lacked said internal space (50).

17. The method of any preceding claim wherein:
the adding comprises diffusion brazing using a powdered material comprising a mixture of first and second component powders, the second powder being a majority, by weight, of the powdered material and the first powder acting to infiltrate the second powder upon melting of the first powder.

18. The method of claim 17 wherein:
the first powder component includes in its composition a quantity of a melting point depressant substantially in excess of that in the second powder.

19. The method of claim 17 or 18 wherein:
the first and second component powders are present in a mass ratio of between 1:10 and 1:2.

20. The method of claim 17, 18 or 19 wherein:
the first component powder has at least 2.5% by weight boron; and
the second component powder has less than 0.5% by weight boron.

21. The method of claim 17, 18 or 19 wherein:
the first component powder has at least 2% by weight boron; and
the second component powder has less than 1% by weight boron.

22. The method of any of claims 17 to 21 wherein:
the first and second component powders are nickel based.

23. The method of any preceding claim wherein:
the internal space (50) extends to a damage site (220, 222) from which the component (200) has lost first material.

24. The method of claim 23 wherein:
the method further comprises removing additional material at least partially from the damage site (220, 222) to create a base surface; and
the adding of the material (90; 232) adds the material (90; 232) atop the base surface at least partially in place of the first material and the additional material.

25. The method of claim 23 or 24 wherein:
said material (90; 232) in major part replaces said first material.

26. The method of any preceding claim wherein:
the blocking element has a first surface portion having a shape effective to re-form an internal surface portion of the component (22; 200) bounding the internal space (50);
the placing causes the first surface portion to at least partially protrude from an intact portion of the component (22; 200); and
the adding of the material (90; 232) includes adding the material atop the first surface portion.

27. The method of any preceding claim wherein:
the component (22; 200) is an internally-cooled gas turbine engine turbine section element.

28. The method of any preceding claim wherein said material (90; 232) is selected from the group consisting of Ni- or Co-based superalloys.

29. The method of any preceding claim wherein said component (22; 200) comprises a substrate material selected from the group consisting of Ni- or Co-based superalloys.

30. The method of any preceding claim wherein the component (22; 200) is a blade having an airfoil and the material is added along a tip (30) of the airfoil.

31. The method of any preceding claim wherein the material (90; 232) is added to a depth of at least 2.0 mm.

32. The method of any preceding claim further comprising:
machining the material (90; 232) to restore an external contour of the component (22; 200).

33. The method of any preceding claim wherein the removing comprises at least one of chemically removing and mechanically removing.

34. The method of any preceding claim wherein the forming comprises:
machining in situ of a first portion of the blocking element that had been subject to said at least partial melting.

35. The method of claim 34 wherein the machining comprises machining the component (22; 200) simultaneously with said first portion.

## Patentansprüche

1. Verfahren zum derartigen Bilden oder Wiederherstellen einer Turbinenmaschinenkomponente (22; 200), dass diese einen Innenraum (50) aufweist, wobei das Verfahren beinhaltet:
an Ort und Stelle erfolgendes Bilden eines Blockierelements auf der Basis eines hitzebeständigen Metalls mit mindestens einem Bereich, der sich innerhalb des Innenraums (50) befinden soll, wobei das Bilden ein zumindest teilweises Schmelzen beinhaltet;
Hinzugeben eines Materials (90; 232) zu der Komponente (22; 200), wobei das Blockierelement den Eintritt des Materials (90; 232) in den Innenraum (50) zumindest teilweise blockiert; und
Entfernen des Blockierelements.

2. Verfahren nach Anspruch 1,
wobei das Hinzugeben durch progressiven Aufbau erfolgt.

3. Verfahren nach Anspruch 1 oder 2,
wobei das Bilden mindestens eines aufweist von Sputtern und thermischem Spritzen.

4. Verfahren nach Anspruch 1, 2 oder 3,
wobei das Bilden beinhaltet:
Einsetzen eines vorgeformten ersten Teils (52) des Blockierelements; und
an Ort und Stelle erfolgendes Bilden eines zweiten Teils (82) des Blockierelements.

5. Verfahren nach Anspruch 4,
wobei das Bilden des zweiten Teils (82) beinhaltet:
mindestens eines von Anwenden von Draht, Band, Pulver oder Paste; und
das mindestens teilweise Schmelzen des Drahts, Bands, Pulvers oder der Paste.

6. Verfahren nach Anspruch 5,
wobei das mindestens teilweise Schmelzen durch Lasererwärmung erfolgt.

7. Verfahren nach Anspruch 4, 5 oder 6,
wobei das Bilden des zweiten Teils (82) mindestens eines aufweist von Sputtern und thermischem Spritzen.

8. Verfahren nach einem der Ansprüche 4 bis 7,
wobei das Bilden beinhaltet:
Bilden des ersten Teils (52) unter Verwendung von einem oder mehreren von:
Schneiden;
Stanzen; und
Gießen; und
Bilden des zweiten Teils (82) aus einem Bindemittel und einem Pulver, das ein oder mehrere hitzebeständige Metalle enthält.

9. Verfahren nach Anspruch 8,
wobei der zweite Teil (82) im Wesentlichen aus dem hitzebeständigen Metallpulver und dem Bindemittel besteht.

10. Verfahren nach Anspruch 8 oder 9,
wobei das hitzebeständige Metallpulver eine Mischung aus hitzebeständigen Metallen aufweist.

11. Verfahren nach einem der vorhergehenden Ansprüche,
wobei das Hinzugeben mindestens eines beinhaltet von:
Schweißen, Laserauftragschweißen und Diffusionslöten.

12. Verfahren nach einem der vorhergehenden Ansprüche,
wobei das Bilden beinhaltet:
Mischen eines hitzebeständigen Metallpulvers und eines Bindemittels.

13. Verfahren nach Anspruch 12,
wobei das Bilden ferner beinhaltet:
Aufbringen des gemischten hitzebeständigen Metallpulvers und Bindemittels auf die Komponente (22; 200).

14. Verfahren nach Anspruch 13,
wobei das Bilden ferner beinhaltet:
Formgebung des aufgebrachten hitzebeständigen Metallpulvers und Bindemittels.

15. Verfahren nach einem der vorhergehenden Ansprüche,
wobei der Bereich einen ersten Bereich, der in einen bestehenden Bereich des Innenraums (50) eingesetzt wird, und einen zweiten Bereich aufweist.

16. Verfahren nach einem der vorhergehenden Ansprüche,
wobei die Komponente (22; 200) zuvor den Innenraum (50) nicht besaß.

17. Verfahren nach einem der vorhergehenden Ansprüche,
wobei das Hinzugeben das Diffusionslöten unter Verwendung eines pulverförmigen Materials beinhaltet, das eine Mischung aus erstem und zweitem Komponentenpulver aufweist, wobei das zweite Pulver ein gewichtsmäßig größerer Teil des pulverförmigen Materials ist und das erste Pulver ein Infiltrieren des zweiten Pulvers nach dem Schmelzen des ersten Pulvers bewirkt.

18. Verfahren nach Anspruch 17,
wobei die erste Pulverkomponente in ihrer Zusammensetzung eine Menge eines Schmelzpunkt-Erniedrigungsmittels im Wesentlichen über der in dem zweiten Pulver beinhaltet.

19. Verfahren nach Anspruch 17 oder 18,
wobei das erste und das zweite Komponentenpulver in einem Masseverhältnis von zwischen 1:10 und 1:2 vorliegen.

20. Verfahren nach Anspruch 17, 18 oder 19,
wobei:
das erste Komponentenpulver mindestens 2,5 Gew.-% Bor aufweist; und
das zweite Komponentenpulver weniger als 0,5 Gew.-% Bor aufweist.

21. Verfahren nach Anspruch 17, 18 oder 19,
wobei:
das erste Komponentenpulver mindestens 2 Gew.-% Bor aufweist; und
das zweite Komponentenpulver weniger als 1 Gew.-% Bor aufweist.

22. Verfahren nach einem der Ansprüche 17 bis 21,
wobei das erste und das zweite Komponentenpulver auf Nickel basieren.

23. Verfahren nach einem der vorhergehenden Ansprüche,
wobei sich der Innenraum (50) zu einer Schadstelle (220, 222) erstreckt, an der die Komponente (200) erstes Material verloren hat.

24. Verfahren nach Anspruch 23,
wobei das Verfahren ferner zumindest ein teilweises Entfernen von zusätzlichem Material von der Schadstelle (220, 222) beinhaltet, um eine Basisfläche zu schaffen;
und
wobei bei dem Hinzugeben des Materials (90; 232) das Material (90; 232) oben auf der Basisfläche zumindest teilweise anstelle des ersten Materials und des zusätzlichen Materials hinzugegeben wird.

25. Verfahren nach Anspruch 23 oder 24,
wobei das Material (90; 232) das erste Material zu einem größeren Teil ersetzt.

26. Verfahren nach einem der vorhergehenden Ansprüche,
wobei das Blockierelement einen ersten Flächenbereich mit einer Formgebung aufweist, die zum wieder Bilden eines den Innenraum (50) begrenzenden Innenflächenbereichs der Komponente (22; 200) wirksam ist;
wobei die Platzierung bewirkt, dass der erste Flächenbereich von einem intakten Bereich der Komponente (22; 200) zumindest teilweise hervorsteht; und
wobei das Hinzugeben des Materials (90; 232) das Hinzugeben des Materials oben auf dem ersten Flächenbereich beinhaltet.

27. Verfahren nach einem der vorhergehenden Ansprüche,
wobei die Komponente (22; 200) ein Turbinenabschnittelement einer innengekühlten Gasturbinenmaschine ist.

28. Verfahren nach einem der vorhergehenden Ansprüche,
wobei das Material (90; 232) aus der Gruppe ausgewählt wird, die aus Superlegierungen auf Ni- oder Co-Basis besteht.

29. Verfahren nach einem der vorhergehenden Ansprüche,
wobei die Komponente (22; 200) ein Substratmaterial aufweist, das aus der Gruppe ausgewählt wird, die aus Superlegierungen auf Ni- oder Co-Basis besteht.

30. Verfahren nach einem der vorhergehenden Ansprüche,
wobei die Komponente (22; 200) eine Schaufel mit einem Strömungsprofil ist und das Material entlang einer Spitze (30) des Strömungsprofils hinzugegeben wird.

31. Verfahren nach einem der vorhergehenden Ansprüche,
wobei das Material (90; 232) bis auf eine Tiefe von mindestens 2,0 mm hinzugegeben wird.

32. Verfahren nach einem der vorhergehenden Ansprüche,
das ferner aufweist:
spanende Bearbeitung des Materials (90; 232), um eine äußere Kontur der Komponente (22; 200) wiederherzustellen.

33. Verfahren nach einem der vorhergehenden Ansprüche,
wobei das Entfernen mindestens eines von chemischem Entfernen und mechanischem Entfernen beinhaltet.

34. Verfahren nach einem der vorhergehenden Ansprüche,
wobei das Bilden beinhaltet:
an Ort und Stelle erfolgende spanende Bearbeitung eines ersten Bereichs des Blockierelements, der dem mindestens teilweisen Schmelzen unterzogen wurde.

35. Verfahren nach Anspruch 34,
wobei die spanende Bearbeitung das Bearbeiten der Komponente (22; 200) gleichzeitig mit dem ersten Bereich beinhaltet.

## Revendications

1. Une méthode pour former ou refabriquer un composant de moteur à turbine (22 ; 200) pour avoir un espace interne (50) comprenant de :
former, in situ, un élément de blocage à base de métal réfractaire avec au moins une partie destinée à être dans l'espace interne (50), ce fait de former incluant une fonte au moins partielle ;
ajouter un matériau (90 ; 232) au composant (22 ; 200), l'élément de blocage bloquant au moins partiellement l'entrée du matériau (90 ; 232) à l'espace interne (50) ; et
supprimer l'élément de blocage.

2. La méthode de la revendication 1 dans laquelle l'ajout est par accumulation progressive.

3. La méthode de la revendication 1 ou 2 dans laquelle la formation comprend au moins l'une d'une pulvérisation et d'une projection thermique.

4. La méthode de la revendication 1, 2 ou 3 dans laquelle la formation comprend :
d'insérer une première partie préformée (52) dudit élément de blocage ; et
de former, in situ, une seconde partie (82) dudit élément de blocage.

5. La méthode de la revendication 4 dans laquelle la formation de la seconde partie (82) comprend :
au moins l'une d'une application de fil, bande, poudre, ou pâte ; et
ladite fonte au moins partielle dudit fil, bande, poudre, ou pâte.

6. La méthode de la revendication 5 dans laquelle ladite fonte au moins partielle est par chauffage laser.

7. La méthode de la revendication 4, 5 ou 6 dans laquelle la formation de la seconde partie (82) comprend au moins l'une d'une pulvérisation et d'une projection thermique.

8. La méthode d'une quelconque des revendications 4 à 7 dans laquelle la formation comprend :
de former ladite première partie (52) incluant l'un ou plusieurs de :
découper;
tamponner ; et
couler ; et
former ladite seconde partie (82) à partir d'un liant et d'une poudre contenant un ou plusieurs métaux réfractaires.

9. La méthode de la revendication 8 dans laquelle ladite seconde partie (82) consiste essentiellement en ladite poudre de métal réfractaire et ledit liant.

10. La méthode de la revendication 8 ou 9 dans laquelle ladite poudre de métal réfractaire comprend un mélange de métaux réfractaires.

11. La méthode d'une quelconque revendication précédente dans laquelle l'ajout comprend au moins l'un de :
une fonte, un rechargement laser, et un brasage par diffusion.

12. La méthode d'une quelconque revendication précédente dans laquelle la formation comprend en outre :
de mélanger une poudre de métal réfractaire et un liant.

13. La méthode de la revendication 12 dans laquelle la formation comprend en outre :
d'appliquer la poudre de métal réfractaire et le liant mélangés sur le composant (22 ; 200).

14. La méthode de la revendication 13 dans laquelle la formation comprend en outre :
de façonner la poudre de métal réfractaire et le liant appliqués.

15. La méthode d'une quelconque revendication précédente dans laquelle :
la partie comprend une première partie insérée dans une partie préexistante de l'espace interne (50) et une seconde partie.

16. La méthode d'une quelconque revendication précédente dans laquelle :
le composant (22 ; 200) avait manqué auparavant dudit espace interne (50).

17. La méthode d'une quelconque revendication précédente dans laquelle :
l'ajout comprend un brasage par diffusion utilisant un matériau en poudre comprenant un mélange de première et seconde poudres de composant, la seconde poudre étant une majorité, en poids, de matériau en poudre et la première poudre agissant pour infiltrer la seconde poudre lors de la fonte de la première poudre.

18. La méthode de la revendication 17 dans laquelle :
le premier composant en poudre inclut dans sa composition une quantité d'un agent d'abaissement de point de fusion qui excède substantiellement celle de la seconde poudre.

19. La méthode de la revendication 17 ou 18 dans laquelle :
les première et seconde poudres de composant sont présentes dans un rapport de masse compris entre 1 :10 et 1 :2.

20. La méthode de la revendication 17, 18 ou 19 dans laquelle :
la première poudre de composant a au moins 2,5% en poids de bore ; et
la seconde poudre de composant a moins de 0,5% en poids de bore.

21. La méthode de la revendication 17, 18 ou 19 dans laquelle :
la première poudre de composant a au moins 2% en poids de bore ; et
la seconde poudre de composant a moins de 1 % en poids de bore.

22. La méthode d'une quelconque des revendications 17 à 21 dans laquelle :
les première et seconde poudres de composant sont à base de nickel.

23. La méthode d'une quelconque des revendications précédentes dans laquelle :
l'espace interne (50) s'étend jusqu'à une zone endommagée (220, 22) de laquelle le composant (200) a perdu un premier matériau.

24. La méthode de la revendication 23 dans laquelle :
la méthode comprend en outre de supprimer au moins partiellement un matériau additionnel de la zone endommagée (220, 222) pour créer une surface de base ; et
l'ajout du matériau (30 ; 232) ajoute le matériau (90 ; 232) au-dessus de la surface de base au moins partiellement à la place du premier matériau et du matériau additionnel.

25. La méthode de la revendication 23 ou 24 dans laquelle :
ledit matériau (90 ; 232) remplace en majeure partie ledit premier matériau.

26. La méthode d'une quelconque revendication précédente dans laquelle :
l'élément de blocage a une première partie de surface ayant une forme efficace pour reformer une partie de surface interne du composant (22 ; 200) limitant l'espace interne (50) ;
le placement entraîne la première partie de surface à faire saillie au moins partiellement depuis une partie intacte du composant (22 ; 200) ; et
l'ajout du matériau (90 ; 232) inclut d'ajouter le matériau au-dessus de la première partie de surface.

27. La méthode d'une quelconque revendication précédente dans laquelle :
le composant (22 ; 200) est un élément de section de turbine de moteur à turbine à gaz refroidi en interne.

28. La méthode d'une quelconque revendication précédente dans laquelle ledit matériau (90 ; 232) est sélectionné du groupe consistant en superalliages à base de Ni ou de Co.

29. La méthode d'une quelconque revendication précédente dans laquelle ledit composant (22 ; 200) comprend un matériau de substrat sélectionné du groupe consistant en superalliages à base de Ni ou de Co.

30. La méthode d'une quelconque revendication précédente dans laquelle le composant (22 ; 200) est une pale ayant un profilé aérodynamique et le matériau est ajouté le long d'une extrémité (30) du profilé aérodynamique.

31. La méthode d'une quelconque revendication précédente dans laquelle le matériau (90 ; 232) est ajouté jusqu'à une profondeur d'au moins 2,0 mm.

32. La méthode d'une quelconque revendication précédente comprenant en outre :
d'usiner le matériau (90 ; 232) pour restaurer un contour externe du composant (22 ; 200).

33. La méthode d'une quelconque revendication précédente dans laquelle la suppression comprend au moins l'une d'une suppression chimique ou d'une suppression mécanique.

34. La méthode d'une quelconque revendication précédente dans laquelle la formation comprend :
d'usiner in situ une première partie de l'élément de blocage qui avait fait l'objet de ladite fonte au moins partielle.

35. La méthode de la revendication 34 dans laquelle l'usinage comprend d'usiner le composant (22 ; 200) simultanément avec ladite première partie.
